(19) Europäisches Patentamt
European Patent Office
Office européen des brevets

(11) **EP 3 966 164 B1**

(12) **EUROPÄISCHE PATENTSCHRIFT**

(45) Veröffentlichungstag und Bekanntmachung des Hinweises auf die Patenterteilung:
**25.01.2023 Patentblatt 2023/04**

(21) Anmeldenummer: **20707040.0**

(22) Anmeldetag: **20.02.2020**

(51) Internationale Patentklassifikation (IPC):
**C01B 33/107** (2006.01)

(52) Gemeinsame Patentklassifikation (CPC):
**C01B 33/107**

(86) Internationale Anmeldenummer:
**PCT/EP2020/054490**

(87) Internationale Veröffentlichungsnummer:
**WO 2021/164876 (26.08.2021 Gazette 2021/34)**

(54) **VERFAHREN ZUR GEWINNUNG VON HEXACHLORDISILAN DURCH UMSETZUNG VON MINDESTENS EINEM TEILHYDRIERTEN CHLORDISILAN AN EINEM FESTEN, UNFUNKTIONALISIERTEN ADSORBER**

PROCESS FOR THE PRODUCTION OF HEXACHLORDISILANE BY REACTION OF AT LEAST ONE PARTIALLY HYDROGENATED CHLORORDISILANE ON A SOLID, UNFUNCTIONALIZED ADSORBER

PROCÉDÉ DE PRODUCTION D'HEXACHLORDISILANE PAR RÉACTION D'AU MOINS UN CHLORORDISILANE PARTIELLEMENT HYDROGÉNÉ SUR UN ADSORBEUR SOLIDE NON FONCTIONNALISÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.03.2022 Patentblatt 2022/11**

(73) Patentinhaber: **Wacker Chemie AG**
**81737 München (DE)**

(72) Erfinder:
• **KNOTH, Jens Felix**
**84533 Marktl (DE)**
• **PÄTZOLD, Uwe**
**84489 Burghausen (DE)**
• **STRASSER, Monika**
**84489 Burghausen (DE)**

(74) Vertreter: **Belz, Ferdinand et al**
**Wacker Chemie AG**
**Hanns-Seidel-Platz 4**
**81737 München (DE)**

(56) Entgegenhaltungen:
**WO-A1-2016/091240    CN-A- 106 966 397**

• **YE WAN, XIONG ZHAO, DAZHOU YAN, YU ZHAO, SHUHU GUO, LEI WANG,DIAN YANG: "The Research about Preparation of High PurityHexachlorodisilane", IOP CONF. SERIES: MATERIALS SCIENCE AND ENGINEERING: MATER. SCI. ENG., Bd. 274, 012125, 2017, Seiten 1-7, XP002800700, DOI: 10.1088/1757-899X/274/1/012125**

EP 3 966 164 B1

**Beschreibung**

Die Erfindung betrifft ein Verfahren zur Gewinnung von Hexachlordisilan, wobei zumindest ein teilhydriertes Chlordisilan mit einem festen unfunktionalisierten Adsorbermaterial in Kontakt gebracht und das Hexachlordisilan und/oder das Adsorbermaterial anschließend gegebenenfalls abgetrennt wird.

Hexachlordisilan (HCDS) ist ein wichtiger Ausgangsstoff im Bereich der Mikroelektronik als Vorläuferverbindung zur Gasphasenabscheidung von hochreinen Siliciumnitrid-, Siliciumoxid-, und Siliciumcarbidschichten. Zudem wird es in der Niedertemperaturepitaxie zur Abscheidung epitaktischer Siliciumschichten eingesetzt.

Für den Einsatz in der Mikroelektronik generieren selbst kleinste Spuren an Verunreinigungen, insbesondere Dotierstoffe wie Bor, Phosphor, Arsen und Antimon, erhebliche Probleme. Ist das HCDS mit Dotierstoffen verunreinigt, können diese zu unerwünschten Dotiereffekten führen und durch Migrationsprozesse die Lebenszeit elektrischer Bauteile herabsetzen.

Aus der JPS60145908A ist bekannt, dass HCDS aus der Umsetzung von metallurgischem Silicium und Chlor gewonnen werden kann. Aufgrund der im metallurgischen Silicium enthaltenen Verunreinigungen entstehen allerdings Nebenprodukte wie $AlCl_3$ und $TiCl_4$, die wegen ihres zu HCDS ähnlichem Siedepunkt eine destillative Reinigung erschweren.

Eine Möglichkeit HCDS wirtschaftlich in hoher Reinheit herzustellen ist dagegen die Gewinnung aus den Abgasen bei der Abscheidung von polykristallinem Silicium (Polysilicium), z.B. nach dem Siemens-Verfahren. Hierbei fällt nach einer Kondensation der Abgase HCDS im Gemisch mit weiteren Chlormonosilanen und Chlordisilanen mit einer geringen Konzentration an Verunreinigungen an. Die Abtrennung von teilhydrierten Disilanen vom HCDS ist aufgrund der sehr ähnlichen Siedepunkte technisch aufwändig.

Gemäß EP 1 264 798 A1 werden aus einem Abgasstrom aus der Polysiliciumherstellung zunächst niedrigsiedende Komponenten (z.B. Trichlorsilan (TCS)) abgetrennt. Danach wird Siliciumtetrachlorid destillativ entfernt. Die erhaltene Fraktion wird dann erneut destillativ aufgereinigt oder es wird Chlor zugefügt, um teilhydrierte Disilane (z.B. Tetrachlordisilan) zu chlorieren, bevor HCDS von höher siedenden Verbindungen (z.B. Octachlortrisilan) destillativ abgetrennt wird.

In der US 7,691,357 B2 wird die Chlorierung eines Chlorsilangemischs aus dem Abgasstrom aus der Polysiliciumherstellung beschrieben. Hierbei werden allerdings nicht nur die wasserstoffhaltigen Disilane chloriert, sondern es kommt auch zur Spaltung von Disilanen, u.a. auch von HCDS. Neben dem aus der Spaltung resultierenden Ausbeuteverlust an HCDS können durch die Chlorzugabe Verunreinigungen eingebracht werden. Ferner muss gegebenenfalls vorhandenes chlorhaltiges Abgas aufwändig gereinigt werden und der Einsatz von Chlor erhöht generell den apparativen Aufwand.

JP 2006176357 A2 offenbart den Einsatz von Aktivkohle bei erhöhter Temperatur und erhöhtem Druck, um aus einem Gemisch teilhydrierter Disilane Tetrachlordisilan und Pentachlordisilan teilweise zu HCDS umzusetzen. Hierdurch wird die HCDS-Ausbeute zwar gesteigert, im Produkt sind nach der Umsetzung jedoch noch erhebliche Mengen teilhydrierte Disilane enthalten, wodurch diese aufwändig destillativ abgetrennt werden müssen.

In der DE 3503262 wird der Einsatz von aprotischen Organostickstoff- und Organophosphorverbindungen bei Temperaturen von 20 bis 160°C unter Spaltung von Disilangemischen beschrieben. Die Zersetzung von Pentachlordisilan kann schneller verlaufen als die von HCDS und durch Auswahl geeigneter Prozessparameter HCDS im Wesentlichen unzersetzt erhalten werden. Die Organostickstoff- und Organophosphorverbindungen werden dabei in das Produktgemisch eingebracht und können eine Verunreinigungsquelle darstellen. Insbesondere die Gegenwart der Phosphorverbindungen kann aufgrund der Wirkung von Phosphor als Dotierstoff kritisch sein. Zudem entsteht gemäß dem beschriebenen Verfahren kein zusätzliches HCDS.

Aus der WO 2016/091240 A1 geht der Einsatz katalytisch aktiver Organostickstoff- und Organophosphorverbindungen zur Gewinnung von HCDS aus Prozessabgasströmen der Polysiliciumherstellung hervor. Neben der Umsetzung teilhydrierter Disilane zu HCDS können allerdings signifikante Mengen an Hochsiedern auftreten. Dies kann insbesondere auf eine Disproportionierung der Disilane zurückzuführen sein, da die Katalysatoren als Disproportionierungskatalysatoren wirken können (vgl. CA1162028A). Auch hier kann es durch die Verwendung der Organostickstoff- und Organophosphorverbindungen zu einer Kontamination des Zielproduktes kommen. Daneben sind die Ausbeuten an HCDS eher gering.

CN 106 966 397 A offenbart ein Verfahren zur Gewinnung von Hexachlordisilan.

Der vorliegenden Erfindung lag die Aufgabe zugrunde, ein effizientes Verfahren zur Herstellung von für den Einsatz in der Elektronikindustrie geeignetem HCDS bereitzustellen, bei dem die aus dem Stand der Technik bekannten Nachteile vermieden werden.

Diese Aufgabe wird gelöst durch ein Verfahren zur Gewinnung von HCDS, das die folgenden Schritte umfasst:

a) Inkontaktbringen von zumindest einem teilhydrierten Chlordisilan der allgemeinen Formel $H_xSi_2Cl_{(6-x)}$ mit x = 1 bis 5 in flüssigem Zustand mit einem festen unfunktionalisierten Adsorbermaterial, ausgewählt aus der Gruppe mit Silicate, Alumosilicate (z.B. Zeolithe, Molsiebe), organisches Polymer und Kombinationen daraus,

b) gegebenenfalls Abtrennen des Hexachlordisilans (z.B. mittels Destillation) und/oder gegebenenfalls Abtrennen des Adsorbermaterials (z.B. mittels Filtration).

Vorzugsweise handelt es sich im Schritt a) um ein Gemisch, umfassend das zumindest eine teilhydrierte Chlordisilan.

Es hat sich überraschend gezeigt, dass sich teilhydrierte Disilane selektiv zu HCDS umsetzen lassen, indem sie mit dem unfunktionalisierten Adsorbermaterial in Kontakt gebracht werden. Die Anwesenheit zusätzlicher Verbindungen wie Organostickstoff- und/oder Organophosphorverbindungen oder auch metall- und/oder halbmetallhaltiger Verbindungen ist nicht erforderlich.

Unter dem Begriff "unfunktionalisiert" soll insbesondere verstanden werden, dass das Adsorbermaterial vor dem Inkontaktbringen keine zusätzlichen chemisch gebundenen funktionellen Gruppen, insbesondere keine stickstoff- und phosphorhaltigen Gruppen, trägt. Handelt es sich um Silicate und/oder Alumosilicate sollen deren Struktureinheiten (Si-O-Si bzw. Al-O und Si-OH bzw. Al-OH) nicht als funktionelle Gruppe verstanden werden. Handelt es sich bei dem Adsorbermaterial um ein organisches Polymer, kann es bevorzugt sein, dass dieses ausschließlich aus Kohlenstoff- und Wasserstoffatomen aufgebaut ist oder zumindest keine Stickstoff- und Phosphoratome umfasst. Ferner soll unter "unfunktionalisiert" verstanden werden, dass das Adsorbermaterial vor dem Inkontaktbringen nicht imprägniert wird, insbesondere nicht mit katalytisch aktiven Substanzen und/oder Metallen/Halbmetallen.

Im Gegensatz zu den aus dem Stand der Technik bekannten heterogenen und homogenen Katalysatoren (vgl. WO 2016/091240 A1) kann mit dem erfindungsgemäßen Verfahren eine zusätzliche Ausbeute an HCDS von mehr als 30 Gew.-%, bevorzugt von mehr als 40 Gew.-%, besonders bevorzugt von mehr als 50 Gew.-%, insbesondere von mehr als 70 Gew.-%, erzeugt werden.

Der Druck und die Temperatur des Verfahrens, insbesondere des Schritts a), werden so gewählt, dass das Gemisch beim Inkontaktbringen mit dem Adsorbermaterial in flüssigem Aggregatszustand vorliegt. Vorzugsweise findet der Schritt a) in einem Druckbereich von 0,1 bis 2,1 MPa, besonders bevorzugt 0,11 bis 1,1 MPa, insbesondere 0,125 bis 0,6 MPa, statt. Die Temperatur liegt vorzugsweise bei -50 bis 300°C, besonders bevorzugt bei -10 bis 200°C, besonders bevorzugt bei 0 bis 180°C. Generell verläuft der Schritt a) bereits optimal bei einer Temperatur von 20°C und einem Druck von 0,1 MPa. Bei den Druckangaben handelt es sich um den Absolutdruck.

Mit besonderem Vorteil kann nach dem Schritt a) der Anteil an nicht umgesetztem teilhydrierten Chlordisilan, bezogen auf dessen Menge vor dem Schritt a) (Anfangsgehalt) weniger als 10 %, bevorzugt weniger als 6 %, besonders bevorzugt weniger als 3 %, betragen. Gegebenenfalls kann dieser Anteil auch weniger als 1 % betragen, was einem vollständigen oder nahezu vollständigen Umsatz (> 99 %) entspricht.

Insbesondere handelt es sich bei dem teilhydrierten Chlordisilan um Pentachlordisilan. Der Anteil an nicht umgesetztem Pentachlordisilan, bezogen auf dessen Anfangsgehalt, kann nach Schritt a) weniger als 5 %, bevorzugt weniger als 2 %, besonders bevorzugt weniger als 0,1 % betragen. Insbesondere wird kein Pentachlordisilan mehr nach Schritt a) beobachtet (Pentachlordisilan zu 100 % umgesetzt).

Das organische Polymer ist vorzugsweise ausgewählt aus der Gruppe mit Polystyrol, Polydivinylbenzol, Styrol-Divinylbenzol-Copolymer und Kombinationen daraus. Des Weiteren kann es sich um Polyethylen handeln, gegebenenfalls in Kombination mit den zuvor genannten Polymeren.

Vorzugsweise umfasst das unfunktionalisierte Adsorbermaterial ein Styrol-Divinylbenzol-Copolymer. Besonders bevorzugt handelt es sich bei dem Adsorbermaterial um ein Styrol-Divinylbenzol-Copolymer.

Bei dem Adsorbermaterial kann es sich auch um Aktivkohle handeln.

Das Adsorbermaterial kann in Form von Partikeln und/oder Fasern vorliegen. Besonders bevorzugt liegt es in partikulärer Form vor und weist vorzugsweise eine Oberfläche von 200 bis 2000 m$^2$/g, besonders bevorzugt von 400 bis 1000 m$^2$/g, insbesondere von 500 bis 850 m$^2$/g, auf. Die Oberfläche kann bspw. mittels BET-Messung erfolgen (DIN ISO 9277).

Beispielsweise kann es sich um Partikel mit einer mittleren Partikelgröße (= mittlerer Partikeldurchmesser) von 0,149 bis 4,760 mm (4 bis 100 mesh), bevorzugt 0,177 bis 2,0 mm (10 bis 80 mesh), besonders bevorzugt 0,210 bis 1,410 mm (14 bis 70 mesh), handeln. Die Bestimmung der mittleren Partikelgröße kann mittels dynamischer Bildanalyse (ISO 13322-2), Laserstreuung oder Siebung erfolgen.

Das Adsorbermaterial kann ferner porös ausgebildet sein. Insbesondere kann es sich um makroporöse Partikel handeln. Vorzugsweise weist das Adsorbermaterial einen mittleren Porendurchmesser von 1 bis 900 *10$^{-10}$ m, bevorzugt von 2 bis 450 *10$^{-10}$ m, besonders bevorzugt von 4 bis 200 *10$^{-10}$ m, insbesondere von 5 bis 125 *10$^{-10}$, auf.

Das Adsorbermaterial kann durch das Inkontaktbringen mit Hexachlordisilan oder mit einem dieses enthaltenden Gemischs ein Quellverhalten zeigen. Vorzugsweise liegt die Volumenzunahme (Quellung) eines partikelförmigen Adsorbermaterials allerdings bei ≤ 7 %, besonders bevorzugt ≤ 6 %, insbesondere bei ≤ 5 %.

Das erfindungsgemäße Verfahren wird vorzugsweise wasserfrei oder zumindest im Wesentlichen wasserfrei durchgeführt. Unter im Wesentlichen wasserfrei soll verstanden werden, dass Spuren von Wasser im Adsorbermaterial enthalten sein können. Üblicherweise sind weniger als 5 Gew.-%, bevorzugt weniger als 3 Gew.-%, besonders bevorzugt weniger als 2 Gew.-%, enthalten.

Für die Wirkungsweise ist es grundsätzlich unerheblich, dass das Adsorbermaterial die genannten Spuren an Wasser aufweist. Um Verluste durch eine Chlordisilan-Hydrolyse zu vermeiden, wird für gewöhnlich der Wassergehalt so gering wie möglich gehalten. Grundsätzlich wird also keine Feuchtigkeit zusätzlich zugeführt. Es ist grundsätzlich zwar nicht erforderlich, das Adsorbermaterial einem dem Schritt a) vorgelagerten Trockenschritt zu unterziehen, da der genannte Wasseranteil bei üblichen Adsorbermaterialien regelmäßig nicht überschritten wird. Allerdings kann es u.U. dennoch bevorzugt sein, vor dem Schritt a) einen Trocknungsschritt durchzuführen.

Die eingesetzten Chlordisilane sind generell wasserfrei, unabhängig davon, ob sie als Bestandteil eines Gemisches vorliegen oder einzeln.

Gemäß einer bevorzugten Ausführungsform liegt in Schritt a) das Adsorbermaterial als Festbett in einem oder mehreren in Reihe oder parallel angeordneten Behältern vor, die von dem teilhydrierten Chlordisilan bzw. einem dieses enthaltenden Gemischs kontinuierlich durchströmt werden. Vorzugsweise wird die Rückhaltung des als Festbett vorliegenden Adsorbermaterials mit einem Sieb oder einer Lochblende umgesetzt. Auf diese Weise kann ein zusätzlicher Trennschritt (Schritt b) entfallen.

Die hydrodynamische Verweilzeit $\tau$ des teilhydrierten Chlordisilans oder eines dieses enthaltenden Gemischs in einem mit dem Adsorbermaterial gefüllten Reaktionsvolumen (dabei kann es sich um einen oder mehrere Behälter handeln) beträgt bevorzugt 1 min bis 1800 min, besonders bevorzugt 10 bis 240 min, insbesondere 15 bis 60 min. $\tau$ berechnet sich nach $\tau = \frac{V_R}{\dot{V}}$, wobei

$V_R$: Reaktionsvolumen: mit dem Adsorbermaterial gefülltes Volumen [m$^3$],
$\dot{V}$: Volumenstrom des Chlordisilans [m$^3$/min].

Grundsätzlich kann das teilhydrierte Chlordisilan oder ein dieses enthaltende Gemisch auch eine vorgegebene Zeitspanne mit dem Adsorbermaterial als Festbett oder als Wirbelbett in Kontakt bleiben und danach gemäß Schritt b) abgetrennt werden (diskontinuierliche Verfahrensführung). Die Verweilzeit beträgt dabei vorzugsweise weniger als 24 h, besonders bevorzugt weniger als 4 h, insbesondere weniger als 1 h. Das Abtrennen kann im einfachsten Fall durch ein Ablassen aus einem Behälter erfolgen, wobei das feste Adsorbermaterial durch ein Sieb oder eine Lochblende zurückgehalten wird. Unter Umständen kann bei einer längeren Verweilzeit eine teilweise Zersetzung des Zielproduktes auftreten.

Vorzugsweise erfolgt das Abtrennen des Adsorbermaterials im Schritt b) durch eine Fest-Flüssig-Trennung, insbesondere durch eine Filtration.

Gemäß einer bevorzugten Ausführungsform ist das zumindest eine teilhydrierte Chlordisilan Bestandteil eines Gemischs, enthaltend mindestens ein Chlorsilan der allgemeinen Formel $H_{(4-x)}SiCl_x$ mit x = 1 bis 4.

Bei dem Gemisch kann es sich insbesondere um einen Abgasstrom aus der Herstellung von Polysilicium durch Wasserstoffreduktion von Chlorsilan handeln (z.B. Siemens-Verfahren).

Des Weiteren kann es sich bei dem Gemisch um einen Abgasstrom aus der Herstellung von Tetrachlorsilan durch Hydrierung handeln (z.B. Hochtemperaturkonvertierung).

In beiden Verfahren kann ein höher hydriertes Silan ausgewählt aus der Gruppe mit Silan, Monochlorsilan und Dichlorsilan zugesetzt werden, um den Anteil an HCDS im Abgasstrom zu erhöhen.

Da die Abgase in der Regel gasförmig anfallen, werden sie vorzugsweise mittels Kondensation vor dem Schritt a) verflüssigt.

In dem Gemisch sind insbesondere Chlorsilane und Chlordisilane ausgewählt aus der Gruppe mit Dichlorsilan, Trichlorsilan, Tetrachlorsilan, Dichlordisilan, Trichlordisilan, Tetrachlordisilan, Pentachlordisilan und HCDS enthalten.

Es kann vorgesehen sein, dass in dem Gemisch enthaltene niedrigsiedende Chlorsilane vor dem Inkontaktbringen mit dem Adsorbermaterial, insbesondere mittels Destillation, abgetrennt werden. Unter niedrigsiedenden Chlorsilanen sind solche zu verstehen, die einen niedrigeren Siedepunkt als Siliciumtetrachlorid (57,65°C bei Normaldruck) aufweisen. Gegebenenfalls kann sich an diesen Trennschritt noch eine Filtration anschließen.

Handelt es sich bei dem für Schritt a) bereitgestellten Gemisch um einen Abgasstrom aus der Herstellung von Polysilicium, kann die Abscheidung des Polysiliciums derart durchgeführt werden, dass der Gehalt an HCDS im kondensierten Abgasstrom erhöht ist. Dies kann z.B. durch Zugabe zusätzlicher Mengen an höher hydrierten Chlorsilanen der Formel $H_{(4-x)}SiCl_x$ mit x = 2 bis 4 (z.B. Dichlorsilan) während der Abscheidung erreicht werden. Diese besonders wirtschaftliche Verfahrensweise hat zwar generell den Nachteil, dass verstärkt auch teilhydrierte Disilane gebildet werden. Allerdings können diese nun durch das erfindungsgemäße Verfahren effizient zu HCDS umgesetzt werden. Ohne die Anwendung des erfindungsgemäßen Verfahrens würden die teilhydrierten Silane einen erhöhten Trennaufwand und verstärkte Abfallmengen erzeugen.

Nach dem Schritt a) weist das Gemisch einen erhöhten Gehalt an HCDS auf und der Anteil an teilhydrierten Disilanen ist stark verringert. Nach dem Schritt a) berechnet sich der Anteil $Y$ an teilhydrierten Disilanen (Summe aus: Pentachlordisilan,

Tetrachlordisilan; Trichlordisilan; Dichlordisilan) bezogen auf den Anteil an HCDS nach:

$$Y = X_{part}/X_{HCDS}$$

mit:

$X_{part} =$      Massenanteil teilhydrierter Disilane in Gew.-%
$X_{HCDS} =$      Massenanteil HCDS in Gew.-%

Insbesondere kann mit dem erfindungsgemäßen Verfahren der Wert für $Y$ stark reduziert werden. So beträgt das Verhältnis $Z$ aus dem Wert für Y nach dem Schritt a) $Y_1$ und dem Wert für $Y$ vor dem Schritt a) $Y_0$ vorzugsweise weniger als 10, besonders bevorzugt weniger als 6, insbesondere weniger als 3.

$$Z = Y_1/Y_0$$

mit

     $Y_1$ = Anteil an teilhydrierten Disilanen bezogen auf HCDS nach Schritt a)
     $Y_0$ = Anteil an teilhydrierten Disilanen bezogen auf HCDS vor Schritt a).

Dies wird erreicht durch einen Umsatz an Pentachlordisilan, Tetrachlordisilan, Trichlordisilan und Dichlordisilan von jeweils > 85 %, bevorzugt von jeweils > 95 %, besonders bevorzugt von jeweils > 97 %, insbesondere von jeweils > 99 %.

Hierbei berechnet sich der Umsatz nach:

$$U = 1 - c/c_0$$

mit:

     $U$ = Umsatz der jeweiligen Komponente
     c = Konzentration der jeweiligen Komponente nach Schritt a) im Gemisch in Gew.-%
     $c_0$ = Konzentration der jeweiligen Komponente vor Schritt a) im Gemisch in Gew.-%
     Insbesondere kann das generell schwierig abzutrennende Pentachlordisilan auf einen Anteil (bezogen auf HCDS) von < 1,0 %, bevorzugt < 0,1 % besonders bevorzugt < 0,01 %, reduziert werden.

Aus dem nach Schritt a) erhaltenen Gemisch können in Schritt b) Chlorsilane der allgemeinen Formel $H_{(4-x)}SiCl_x$ mit x = 1-4, insbesondere mit x = 1-2 als Destillat abgetrennt werden. Aus der verbleibenden Hochsiederfraktion kann HCDS gewonnen werden, ohne dass noch eine weitere Destillation zur Abtrennung von Chlordisilanen der allgemeinen Formel $H_{(x)}Si_2Cl_{6-x}$ mit x = 1-4 erfolgen muss. Insbesondere kann dieser letzte Destillationsschritt entfallen, wenn das Gemisch vor dem Schritt a) keine höhersiedenden Verbindungen (d.h. mit einem Siedepunkt größer dem von HCDS, z.B. Si (z.B. Staub) oder $Si_3Cl_8$) enthalten sind, da diese im Schritt a) grundsätzlich nicht als Nebenprodukt anfallen.

Bevorzugt weist das im Schritt a) eingesetzte Gemisch einen Gehalt an Verunreinigungen (Metalle und Dotierstoffe wie z.B. Phosphor) von jeweils nicht mehr als 100 ppbw, besonders bevorzugt von jeweils nicht mehr als 10 ppbw, insbesondere bevorzugt von jeweils nicht mehr als 5 ppbw auf. Damit kann eine weitere Aufreinigung zur Abtrennung dieser Verunreinigungen entfallen. Auch der Gehalt an Stickstoff liegt für gewöhnlich in den genannten Grenzen. Durch den Einsatz des unfunktionalisierten Adsorbermaterials bleibt die grundsätzlich hohe Reinheit des Gemischs erhalten.

Vorzugsweise wird vor dem Schritt a) und/oder nach dem Schritt a) und gegebenenfalls nach dem Schritt b) die Konzentration teilhydrierter Chlordisilane und/oder von HCDS bestimmt. Auf diese Weise kann beispielsweise bei einem kontinuierlichen Durchströmen des Adsorbermaterials als Festbett der Massenstrom des Gemischs angepasst werden. Die Bestimmung der Konzentration kann mittels Gaschromatographie mit Wärmeleitfähigkeitsdetektor (GC-WLD) erfolgen, wobei die Probenentnahme vorzugsweise kontinuierlich erfolgt.

Es kann vorgesehen sein, den Schritt a) zweimal oder mehrmals hintereinander durchzuführen.

Ein weiterer Aspekt der Erfindung betrifft die Verwendung des Adsorbermaterials zur Gewinnung von HCDS, insbesondere nach dem beschriebenen Verfahren. Bezüglich der weiteren Ausgestaltung des Adsorbermaterials kann auf die bisherige Beschreibung verwiesen werden.

**Beispiel 1**

Zu 3,75 g eines Gemischs, enthaltend Chlorsilane der allgemeinen Formel $H_{(4-x)}SiCl_x$ mit x = 1 bis 4, teilhydrierte Disilane der allgemeinen Formel $H_xSi_2Cl_{(6-x)}$ mit x = 1 bis 5 und HCDS wurden 0,15 g des unfunktionalisierten Adsorbermaterials zugegeben. Nach 24 h Verweilzeit bei 22°C wurde das Adsorbermaterial mittels Filtration abgetrennt und das erhaltene Gemisch mittels Gaschromatographie mit Wärmeleitfähigkeitsdetektor (GC-WLD) analysiert. Als Adsorbermaterial wurde ein Styrol-Divinylbenzol-Copolymer eingesetzt (z.B. Amberlite XAD-4). Die Partikelgröße betrug 0,25-0,84 mm (20-60 mesh), die Oberfläche 750 m²/g und das unfunktionalisierte Adsorbermaterial wies einen mittleren Porendurchmesser von 50*10⁻¹⁰ m auf.

Tabelle 1

| Komponente | vor Schritt a) | nach Schritt b) |
|---|---|---|
| Dichlorsilan/ Gew.-% | 0,0000 | 0,0577 |
| Trichlorsilan/ Gew.-% | 0,0010 | 0,7589 |
| Tetrachlorsilan/ Gew.-% | 98,5769 | 98,1206 |
| Dichlordisilan/ Gew.-% | 0,0248 | 0,0026 |
| Trichlordisilan/ Gew.-% | 0,0223 | 0,0071 |
| Tetrachlordisilan/ Gew.-% | 0,2141 | 0,0247 |
| Pentachlordisilan/ Gew.-% | 0,5874 | 0,0000 |
| HCDS/ Gew.-% | 0,5735 | 0,9673 |

Wie aus Tabelle 1 ersichtlich, konnte nach dem Schritt b) ein erhöhter Anteil an HCDS gefunden werden (169 % des HCDS-Anteils im eingesetzten Gemisch). Der Anteil der teilhydrierten Chlordisilane bezogen auf HCDS reduzierte sich auf 2,4 % des Anfangswertes (im eingesetzten Gemisch). Pentachlordisilan wurde innerhalb der Nachweisgrenze sogar komplett umgesetzt.

**Beispiel 2**

Zu 7,4 g eines Gemischs, enthaltend Chlorsilane der allgemeinen Formel $H_{(4-x)}SiCl_x$ mit x = 1 bis 4, teilhydrierte Disilane der allgemeinen Formel $H_xSi_2Cl_{(6-x)}$ mit x = 1 bis 5 und HCDS wurden 0,30 g des unfunktionalisierten Adsorbermaterials zugegeben. Nach 60 min Verweilzeit bei 22°C wurde das Adsorbermaterial mittels Filtration abgetrennt und das erhaltene Gemisch wie unter Beispiel 1 analysiert. Als Adsorbermaterial wurde das aus Beispiel 1 eingesetzt.

Tabelle 2

| Komponente | vor Schritt a) | nach Schritt b) |
|---|---|---|
| Dichlorsilan/ Gew.-% | 0,0000 | 0,0516 |
| Trichlorsilan/ Gew.-% | 0,0033 | 0,5532 |
| Tetrachlorsilan/ Gew.-% | 98,6801 | 98,2499 |
| Dichlordisilan/ Gew.-% | 0,0215 | 0,0033 |
| Trichlordisilan/ Gew.-% | 0,0165 | 0,0008 |
| Tetrachlordisilan/ Gew.-% | 0,1837 | 0,0236 |
| Pentachlordisilan/ Gew.-% | 0,5350 | 0,0305 |
| HCDS/ Gew.-% | 0,5599 | 1,0481 |

Selbst bei einer Verweilzeit von 60 min konnte ein deutlich erhöhter Anteil an HCDS gefunden werden wie aus Tabelle 2 hervorgeht (187 % des HCDS-Anteils im eingesetzten Gemisch). Bei dieser Verweilzeit ist der Umsatz der teilhydrierten Chlordisilane etwas geringer. Der Anteil der teilhydrierten Chlordisilane bezogen auf HCDS reduzierte sich auf 4,1 % des Anfangswertes (im eingesetzten Gemisch). Pentachlordisilan wurde zu 94,3 % umgesetzt.

**Beispiel 3**

Zu 3,75 g eines Gemischs, enthaltend Chlorsilane der allgemeinen Formel $H_{(4-x)}SiCl_x$ mit x = 1 bis 4, teilhydrierte Disilane der allgemeinen Formel $H_xSi_2Cl_{(6-x)}$ mit x = 1 bis 5 und HCDS wurden 0,15 g des Adsorbermaterials zugegeben. Nach 27 h Verweilzeit bei 22°C wurde das Adsorbermaterial mittels Filtration abgetrennt und das erhaltene Gemisch wie unter Beispiel 1 analysiert. Als Adsorbermaterial wurde ein Styrol-Divinylbenzol-Copolymer eingesetzt (z.B. Amberlite XAD-1180). Die Partikelgröße betrug 0,25-0,84 mm (20-60 mesh), die Oberfläche 600 $m^2$/g und das Adsorbermaterial wies einen mittleren Porendurchmesser von $300*10^{-10}$ m auf.

Tabelle 3

| Komponente | vor Schritt a) | nach Schritt b) |
|---|---|---|
| Dichlorsilan/ Gew.-% | 0,0000 | 0,0422 |
| Trichlorsilan/ Gew.- % | 0,0025 | 0,6958 |
| Tetrachlorsilan/ Gew.-% | 98,7228 | 98,3846 |
| Dichlordisilan/ Gew.-% | 0,0224 | 0,0031 |
| Trichlordisilan/ Gew.-% | 0,0088 | 0,0066 |
| Tetrachlordisilan/ Gew.-% | 0,1711 | 0,0384 |
| Pentachlordisilan/ Gew.-% | 0,5252 | 0,0004 |
| HCDS/ Gew.-% | 0,5472 | 0,7410 |

Nach dem Schritt b) konnte ein erhöhter Anteil an HCDS festgestellt werden (Tabelle 3; 135 % des HCDS-Anteils im eingesetzten Gemisch). Der Anteil der teilhydrierten Chlordisilane bezogen auf HCDS reduzierte sich auf 4,9 % des Anfangswertes (im eingesetzten Gemisch). Pentachlordisilan wurde innerhalb der Nachweisgrenze zu über 99,9 % umgesetzt.

**Vergleichsbeispiel 4**

Der Versuchsaufbau war analog dem Beispiel 1, allerdings wurde ein aminofunktionalisiertes Polymerharz (Amberlyst 21 A) Adsorbermaterial gemäß WO 2016/091240 A1 eingesetzt.

Tabelle 4

| Komponente | vor Schritt a) | nach Schritt b) |
|---|---|---|
| Dichlorsilan/ Gew.-% | 0,0000 | 0,0120 |
| Trichlorsilan/ Gew.-% | 0,0025 | 0,9794 |
| Tetrachlorsilan/ Gew.-% | 98,7228 | 98,6081 |
| Dichlordisilan/ Gew.-% | 0,0224 | 0,0000 |
| Trichlordisilan/ Gew.-% | 0,0088 | 0,0000 |
| Tetrachlordisilan/ Gew.-% | 0,1711 | 0,0243 |
| Pentachlordisilan/ Gew.-% | 0,5252 | 0,0015 |
| HCDS/ Gew.-% | 0,5472 | 0,2123 |

Zwar verringerte sich der Anteil der teilhydrierten Chlordisilane bezogen auf das HCDS auf 9,2 % des Anfangswertes, allerdings fiel diese Abnahme deutlich kleiner aus als nach dem erfindungsgemäßen Verfahren (vgl. Tabelle 4). Zudem verringerte sich auch der Anteil von HCDS im Gemisch auf 39 % des Anteils im eingesetzten Gemisch.

**Vergleichsbeispiel 5**

Der Versuchsaufbau war analog dem Beispiel 3, allerdings wurde ein N-funktionalisiertes Polymerharz (Seplite LSC 794) Adsorbermaterial gemäß WO 2016/091240 A1 eingesetzt.

Tabelle 5

| Komponente | vor Schritt a) | nach Schritt b) |
|---|---|---|
| Dichlorsilan/ Gew.-% | 0,0000 | 0,0021 |
| Trichlorsilan/ Gew.-% | 0,0025 | 0,0480 |
| Tetrachlorsilan/ Gew.-% | 98,7228 | 98,9191 |
| Dichlordisilan/ Gew.-% | 0,0224 | 0,0216 |
| Trichlordisilan/ Gew.-% | 0,0088 | 0,0025 |
| Tetrachlordisilan/ Gew.-% | 0,1711 | 0,0932 |
| Pentachlordisilan/ Gew.-% | 0,5252 | 0,3938 |
| HCDS/ Gew.-% | 0,5472 | 0,5123 |

Aus der Tabelle 5 geht eine insgesamt niedrige Reaktivität hervor. Pentachlordisilan wurde nur mit einem Umsatz von 25,0 % umgesetzt. Ferner kam es zu einer Reduktion der HCDS-Ausbeute (94 % des HCDS-Anteils im eingesetzten Gemisch).

**Vergleichsbeispiel 6**

Der Versuchsaufbau war analog dem Beispiel 2, allerdings wurde ein aminofunktionalisiertes Polymerharz (Amberlyst 21 A) als Adsorbermaterial gemäß WO 2016/091240 A1 eingesetzt.

Tabelle 6

| Komponente | vor Schritt a) | nach Schritt b) |
|---|---|---|
| Dichlorsilan/ Gew.- % | 0,0000 | 0,0198 |
| Trichlorsilan/ Gew.-% | 0,0033 | 0,6114 |
| Tetrachlorsilan/ Gew.-% | 98,6801 | 98,5583 |
| Dichlordisilan/ Gew.-% | 0,0215 | 0,0046 |
| Trichlordisilan/ Gew.-% | 0,0165 | 0,0022 |
| Tetrachlordisilan / Gew.-% | 0,1837 | 0,0474 |
| Pentachlordisilan / Gew.-% | 0,5350 | 0,0902 |
| HCDS/ Gew.-% | 0,5599 | 0,6243 |

Bei einer Verweilzeit von 60 min konnte gemäß Tabelle 6 ein leicht erhöhter Anteil an HCDS gefunden werden (112 % des HCDS-Anteils im eingesetzten Gemisch). Bei dieser Verweilzeit ist der Umsatz der teilhydrierten Chlordisilane geringer. Der Anteil der teilhydrierten Chlordisilane bezogen auf HCDS reduzierte sich auf 17,1 % des Anfangswertes (im eingesetzten Gemisch). Pentachlordisilan wurde zu 83,1 % umgesetzt. Es zeigt sich deutlich, dass im Vergleichsbeispiel nur sehr viel geringere Ausbeuten an HCDS erhalten werden und bei wirtschaftlich wichtigen kurzen Verweilzeiten der Umsatz der teilhydrierten Disilane deutlich geringer ist als beim erfindungsgemäßen Verfahren.

**Patentansprüche**

1. Verfahren zur Gewinnung von Hexachlordisilan, umfassend

    c) Inkontaktbringen von zumindest einem teilhydrierten Chlordisilan der allgemeinen Formel $H_xSi_2Cl_{(6-x)}$ mit x

= 1 bis 5 in flüssigem Zustand mit einem festen unfunktionalisierten Adsorbermaterial, ausgewählt aus der Gruppe mit Silicate, Alumosilicate, organisches Polymer und Kombinationen daraus,
d) gegebenenfalls Abtrennen des Hexachlordisilans und/oder gegebenenfalls Abtrennen des Adsorbermaterials.

**2.** Verfahren nach Anspruch 1, **dadurch gekennzeichnet, dass** es sich bei dem teilhydrierten Chlordisilan um Pentachlordisilan handelt.

**3.** Verfahren nach Anspruch 1 oder 2, **dadurch gekennzeichnet, dass** das organische Polymer ausgewählt ist aus der Gruppe mit Polystyrol, Polydivinylbenzol, Styrol-Divinylbenzol-Copolymer und Kombinationen daraus.

**4.** Verfahren nach einem der vorhergehenden Ansprüche, **dadurch gekennzeichnet, dass** es sich bei dem unfunktionalisierten Adsorbermaterial um ein Styrol-Divinylbenzol-Copolymer handelt.

**5.** Verfahren nach einem der vorhergehenden Ansprüche, **dadurch gekennzeichnet, dass** das unfunktionalisierte Adsorbermaterial in einer mittleren Partikelgröße von 0,149 bis 4,760 mm, bevorzugt 0,177 bis 2,0 mm, besonders bevorzugt 0,210 bis 1,410 mm, vorliegt.

**6.** Verfahren nach einem der vorhergehenden Ansprüche, **dadurch gekennzeichnet, dass** das unfunktionalisierte Adsorbermaterial eine Oberfläche von 200 bis 2000 m$^2$/g, bevorzugt von 400 bis 1000 m$^2$/g, insbesondere von 500 bis 850 m$^2$/g, aufweist.

**7.** Verfahren nach einem der vorhergehenden Ansprüche, **dadurch gekennzeichnet, dass** das unfunktionalisierte Adsorbermaterial einen mittleren Porendurchmesser von 1 bis 900 $*10^{-10}$ m, bevorzugt von 2 bis 450 $*10^{-10}$ m, besonders bevorzugt von 4 bis 200 $*10^{-10}$ m, insbesondere von 5 bis 125 $*10^{-10}$ m, aufweist.

**8.** Verfahren nach einem der vorherigen Ansprüche, **dadurch gekennzeichnet, dass** das unfunktionalisierte Adsorbermaterial vor dem Inkontaktbringen einen Anteil Wasser von weniger als 5 Gew.-%, bevorzugt weniger als 3 Gew.-%, besonders bevorzugt weniger als 2 Gew.-%, enthält.

**9.** Verfahren nach einem der vorhergehenden Ansprüche, **dadurch gekennzeichnet, dass** das zumindest eine teilhydrierte Chlordisilan Bestandteil ist eines Gemischs, enthaltend mindestens ein Chlorsilan der allgemeinen Formel $H_{(4-x)}SiCl_x$ mit x = 1 bis 4.

**10.** Verfahren nach Anspruch 9, **dadurch gekennzeichnet, dass** es sich bei dem Gemisch um einen Abgasstrom aus der Herstellung von polykristallinem Silicium durch Wasserstoffreduktion von Chlorsilan handelt.

**11.** Verfahren nach Anspruch 9, **dadurch gekennzeichnet, dass** es sich bei dem Gemisch um einen Abgasstrom aus der Herstellung von Tetrachlorsilan durch Hydrierung handelt.

**12.** Verfahren nach einem der Ansprüche 9 bis 11, **dadurch gekennzeichnet, dass** in dem Gemisch enthaltene niedrigsiedende Chlorsilane vor dem Inkontaktbringen mit dem unfunktionalisierten Adsorbermaterial abgetrennt werden.

**13.** Verfahren nach einem der vorhergehenden Ansprüche, **dadurch gekennzeichnet, dass** nach dem Schritt a) der Anteil an nicht umgesetztem teilhydrierten Chlordisilan weniger als 10 %, bevorzugt weniger als 6 %, besonders bevorzugt weniger als 3 %, beträgt, bezogen auf den jeweiligen Anfangsgehalt des Chlordisilans.

**14.** Verfahren nach Anspruch 2, **dadurch gekennzeichnet, dass** der Anteil an nicht umgesetztem Pentachlordisilan weniger als 5 Gew.-%, bevorzugt weniger als 2 Gew.-%, besonders bevorzugt 0,1 Gew.-%, beträgt, bezogen auf dessen Anfangsgehalt.

**15.** Verwendung eines festen unfunktionalisierten Adsorbermaterials, ausgewählt aus der Gruppe mit Silicate, Alumosilicate, organisches Polymer und Kombinationen daraus zur Gewinnung von Hexachlordisilan durch Inkontaktbringen des Adsorbermaterials mit zumindest einem teilhydrierten Chlordisilan der allgemeinen Formel $H_xSi_2Cl_{(6-x)}$ mit x = 1 bis 5 in flüssigem Zustand.

**Claims**

1. Process for obtaining hexachlorodisilane, comprising

   c) contacting at least one partially hydrogenated chlorodisilane of general formula $H_xSi_2Cl_{(6-x)}$ where x = 1 to 5 in the liquid state with a solid non-functionalized adsorber material selected from the group comprising silicates, aluminosilicates, organic polymer and combinations thereof,
   d) optionally separating the hexachlorodisilane and/or optionally separating the adsorber material.

2. Process according to Claim 1, **characterized in that** the partially hydrogenated chlorodisilane is pentachlorodisilane.

3. Process according to Claim 1 or 2, **characterized in that** the organic polymer is selected from the group comprising polystyrene, polydivinylbenzene, styrene-divinylbenzene copolymer and combinations thereof.

4. Process according to any of the preceding claims, **characterized in that** the non-functionalized adsorber material is a styrene-divinylbenzene copolymer.

5. Process according to any of the preceding claims, **characterized in that** the non-functionalized adsorber material has an average particle size of 0.149 to 4.760 mm, preferably 0.177 to 2.0 mm, particularly preferably 0.210 to 1.410 mm.

6. Process according to any of the preceding claims, **characterized in that** the non-functionalized adsorber material has a surface area of 200 to 2000 m$^2$/g, preferably of 400 to 1000 m$^2$/g, in particular of 500 to 850 m$^2$/g.

7. Process according to any of the preceding claims, **characterized in that** the non-functionalized adsorber material has an average pore diameter of 1 to 900 *10$^{-10}$ m, preferably of 2 to 450 *10$^{-10}$ m, particularly preferably of 4 to 200 *10$^{-10}$ m, in particular of 5 to 125 *10$^{-10}$ m.

8. Process according to any of the preceding claims, **characterized in that** prior to the contacting the non-functionalized adsorber material contains a proportion of water of less than 5% by weight, preferably less than 3% by weight, particularly preferably less than 2% by weight.

9. Process according to any of the preceding claims, **characterized in that** the at least one partially hydrogenated chlorodisilane is a constituent of a mixture containing at least one chlorosilane of general formula $H_{(4-x)}SiCl_x$ where x = 1 to 4.

10. Process according to Claim 9, **characterized in that** the mixture is an offgas stream from the production of polycrystalline silicon by hydrogen reduction of chlorosilane.

11. Process according to Claim 9, **characterized in that** the mixture is an offgas stream from the production of tetrachlorosilane by hydrogenation.

12. Process according to any of Claims 9 to 11, **characterized in that** low-boiling chlorosilanes present in the mixture are separated before the contacting with the non-functionalized adsorber material.

13. Process according to any of the preceding claims, **characterized in that** after step a) the proportion of unconverted partially hydrogenated chlorodisilane is less than 10%, preferably less than 60, particularly preferably less than 30, based on the respective starting content of the chlorodisilane.

14. Process according to Claim 2, **characterized in that** the proportion of unconverted pentachlorodisilane is less than 5% by weight, preferably less than 2% by weight, particularly preferably 0.1% by weight, based on the starting content thereof.

15. Use of a solid non-functionalized adsorber material selected from the group comprising silicates, aluminosilicates, organic polymer and combinations thereof for obtaining hexachlorodisilane by contacting the adsorber material with at least one partially hydrogenated chlorodisilane of general formula $H_xSi_2Cl_{(6-x)}$ where x = 1 to 5 in the liquid state.

**Revendications**

1.  Procédé pour l'obtention d'hexachlorodisilane, comprenant

    c) la mise en contact d'au moins un chlorodisilane partiellement hydrogéné de formule générale $H_xSi_2Cl_{(6-x)}$ avec x = 1 à 5 à l'état liquide avec un matériau adsorbant non fonctionnalisé solide choisi dans le groupe comportant des silicates, des aluminosilicates, un polymère organique et des combinaisons correspondantes,
    d) éventuellement la séparation de l'hexachlorodisilane et/ou éventuellement la séparation du matériau adsorbant.

2.  Procédé selon la revendication 1, **caractérisé en ce que** le chlorodisilane partiellement hydrogéné est le pentachlorodisilane.

3.  Procédé selon la revendication 1 ou 2, **caractérisé en ce que** le polymère organique est choisi dans le groupe comportant un polystyrène, un polydivinylbenzène, un copolymère de styrène-divinylbenzène et des combinaisons correspondantes.

4.  Procédé selon l'une quelconque des revendications précédentes, **caractérisé en ce que** le matériau adsorbant non fonctionnalisé est un copolymère de styrène-divinylbenzène.

5.  Procédé selon l'une quelconque des revendications précédentes, **caractérisé en ce que** le matériau adsorbant non fonctionnalisé est présent en une taille moyenne de particule de 0,149 à 4,760 mm, préférablement de 0,177 à 2,0 mm, particulièrement préférablement de 0,210 à 1,410 mm.

6.  Procédé selon l'une quelconque des revendications précédentes, **caractérisé en ce que** le matériau adsorbant non fonctionnalisé présente une surface de 200 à 2 000 $m^2$/g, préférablement de 400 à 1 000 $m^2$/g, en particulier de 500 à 850 $m^2$/g.

7.  Procédé selon l'une quelconque des revendications précédentes **caractérisé en ce que** le matériau adsorbant non fonctionnalisé présente un diamètre moyen de pores de 1 à 900 $*10^{-10}$ m, préférablement de 2 à 450 $*10^{-10}$ m, particulièrement préférablement de 4 à 200 $*10^{-10}$ m, en particulier de 5 à 125 $*10^{-10}$m.

8.  Procédé selon l'une quelconque des revendications précédentes **caractérisé en ce que** le matériau adsorbant non fonctionnalisé contient, avant la mise en contact, une proportion d'eau inférieure à 5 %. en poids, préférablement inférieure à 3 %. en poids, particulièrement préférablement inférieure à 2 % en poids.

9.  Procédé selon l'une quelconque des revendications précédentes **caractérisé en ce que** l'au moins un chlorodisilane partiellement hydrogéné fait partie d'un mélange, contenant au moins un chlorosilane de formule générale $H_{(4-x)}SiCl_x$ avec x = 1 à 4.

10. Procédé selon la revendication 9, **caractérisé en ce que** le mélange est un flux de gaz d'échappement provenant de la préparation de silicium polycristallin par réduction à l'hydrogène de chlorosilane.

11. Procédé selon la revendication 9, **caractérisé en ce que** le mélange est un flux de gaz d'échappement provenant de la préparation de tétrachlorosilane par hydrogénation.

12. Procédé selon l'une quelconque des revendications 9 à 11, **caractérisé en ce que** des chlorosilanes à bas point d'ébullition contenus dans le mélange sont séparés avant la mise en contact avec le matériau adsorbant non fonctionnalisé.

13. Procédé selon l'une quelconque des revendications précédentes, **caractérisé en ce qu'**après l'étape a) la proportion en chlorodisilane partiellement hydrogéné qui n'a pas réagi est inférieure à 10 %, préférablement inférieure à 6 %, particulièrement préférablement inférieure à 3 %, par rapport à la teneur de départ respective du chlorosilane.

14. Procédé selon la revendication 2, **caractérisé en ce que** la proportion de pentachlorodisilane qui n'a pas réagi est inférieure à 5 % en poids, préférablement inférieure à 2 % en poids, particulièrement préférablement de 0,1 % en poids, par rapport à sa teneur de départ.

**15.** Utilisation d'un matériau adsorbant non fonctionnalisé solide, choisi dans le groupe comportant des silicates, des aluminosilicates, un polymère organique et des combinaisons correspondantes pour l'obtention d'hexachlorodisilane par mise en contact du matériau adsorbant avec au moins un chlorodisilane partiellement hydrogéné de formule générale $H_xSi_2Cl_{(6-x)}$ avec x = 1 à 5 à l'état liquide.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP S60145908 A
- EP 1264798 A1
- US 7691357 B2
- JP 2006176357 A
- DE 3503262
- WO 2016091240 A1
- CA 1162028 A
- CN 106966397 A